(19) Europäisches Patentamt / European Patent Office / Office européen des brevets

(11) **EP 4 411 634 B1**

(12) **EUROPEAN PATENT SPECIFICATION**

(45) Date of publication and mention of the grant of the patent:
**31.12.2025 Bulletin 2026/01**

(21) Application number: **23744351.0**

(22) Date of filing: **06.04.2023**

(51) International Patent Classification (IPC):
**G06T 7/00** (2017.01)  **G06T 7/13** (2017.01)
**G06T 7/70** (2017.01)  **B65C 9/42** (2006.01)
**B65C 9/40** (2006.01)

(52) Cooperative Patent Classification (CPC):
**B65C 9/42; G06T 7/00; G06T 7/13; G06T 7/70;**
B65C 2009/404; G06V 2201/06; Y02E 60/10

(86) International application number:
**PCT/CN2023/085227**

(87) International publication number:
**WO 2024/124746 (20.06.2024 Gazette 2024/25)**

(54) **POLE PIECE LABELING CONTROL METHOD AND DEVICE, ELECTRONIC EQUIPMENT, AND STORAGE MEDIUM**

VERFAHREN UND VORRICHTUNG ZUR STEUERUNG DER MARKIERUNG VON POLSTÜCKEN SOWIE ELEKTRONISCHE VORRICHTUNG UND SPEICHERMEDIUM

PROCÉDÉ ET APPAREIL DE COMMANDE DE MARQUAGE DE PIÈCE POLAIRE, ET DISPOSITIF ÉLECTRONIQUE ET SUPPORT DE STOCKAGE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **15.12.2022 CN 202211609827**

(43) Date of publication of application:
**07.08.2024 Bulletin 2024/32**

(73) Proprietor: **Contemporary Amperex Technology (Hong Kong) Limited**
**Central, Central And Western District (HK)**

(72) Inventors:
• **MA, Lin**
**Ningde, Fujian 352100 (CN)**
• **WU, Chunxu**
**Ningde, Fujian 352100 (CN)**
• **LI, Hongyuan**
**Ningde, Fujian 352100 (CN)**
• **JIANG, Ping**
**Ningde, Fujian 352100 (CN)**
• **LU, Gaofeng**
**Ningde, Fujian 352100 (CN)**

(74) Representative: **Lorenz Seidler Gossel Part. mbB**
**Widenmayerstr. 23**
**80538 München (DE)**

(56) References cited:
WO-A1-2022/052480    CN-A- 109 358 070
CN-A- 111 416 142     CN-A- 113 977 669
CN-A- 114 799 573     CN-A- 114 799 573
CN-A- 115 690 097

## Description

### TECHNICAL FIELD

This application relates to the technical field of batteries, and in particular, to a pole piece labeling control method and device, electronic equipment, and a storage medium.

### BACKGROUND

In order to prevent a pole piece having defects from being involved in a cell and ensure the safety of the cell, it is necessary to detect the pole piece having defects.

In the process of pole piece rolling and slitting, a visual detection system is usually used to detect defects of the pole piece. In the case of detecting that the pole piece has defects, the pole piece is labeled, and then in the winding stage of the cell, label paper may be identified in advance, and the pole piece having defects is automatically identified and cut off.

However, due to the relative movement between a passing roller and the pole piece in the process of transmission movement of the pole piece, there is a deviation between the actual distance of the transmission movement of the pole piece and the pre-measured distance, which leads to a deviation of a labeling position, resulting in abnormal labeling.

WO 2022/052480A1 describes a method for detecting and processing defects in a lithium battery pole piece. The system comprises a camera and a defect processing device. A defect processing time is calculating based on a second encoder value, a distance between the defect processing device and the camera, a response time of the defect processing device and the transmission speed. An inkjet device for marking the material when a defect is detected by imaging device is known from CN 113 977 669 A. CN 114 799 573 A D2 discloses the use of mark holes which are dynamically adapted dependent on a detected defect.

### SUMMARY

In view of the above problems, this application provides a pole piece labeling control method and device, electronic equipment, and a storage medium, which can solve the problem of abnormal labeling caused by the relative movement between the passing roller and the pole piece at present.

According to a first aspect, this application provides a pole piece labeling control method according to the features of claim 1. The method includes: acquiring a pole piece image of a target pole piece, where the pole piece image includes a pole piece mark hole image; determining a defect detection result according to the pole piece image; determining a first distance according to the pole piece mark hole image, where the first distance characterizes a distance from a mark hole in the pole piece mark hole image to an image edge, close to a labeling position, of the pole piece mark hole image; determining a second distance according to the first distance, where the second distance includes a distance from the mark hole in the pole piece mark hole image to the labeling position; determining a labeling delay of the target pole piece according to the second distance; and controlling the labeling of the target pole piece according to the labeling delay and the defect detection result.

According to the pole piece labeling control method designed above, in this solution, the defect detection is carried out through the acquired pole piece image of the target pole piece, a defect detection result is determined, a first distance from a mark hole to an image edge, close to a labeling position, of the pole piece mark hole image is firstly determined through the acquired pole piece mark hole image of the target pole piece, and then a second distance from the mark hole in the pole piece mark hole image to the labeling position is calculated according to the first distance, so that the real-time position condition of the pole piece on the transfer of a compression roller is identified through the pole piece mark hole image, a labeling delay obtained through the calculation based on the second distance is less affected by the relative movement of the pole piece and the compression roller, the accuracy of the labeling delay is improved, and the labeling position based on the labeling delay is more accurate.

According to the first aspect, the determining a second distance according to the first distance includes: acquiring a third distance between a first camera and the labeling position, where the first camera is a camera that shoots the pole piece image of the target pole piece; and determining the second distance according to the third distance and the first distance.

In an optional embodiment of the first aspect, the determining the second distance according to the third distance and the first distance includes: acquiring a length of the pole piece image; and determining the second distance according to the third distance, the first distance, and the length of the pole piece image. According to this embodiment, the second distance is determined based on the third distance, the first distance, and the length of the pole piece image, so that the second distance is determined more accurately, thereby improving the accuracy of the labeling delay. In an optional embodiment of the first aspect, the determining the second distance according to the third distance, the first distance, and the length of the pole piece image includes: calculating the second distance L2 according to a first formula, where the first formula is:

$$L2 = L3 - 2 * L0 + L1.$$

Where L1 is the first distance, L2 is the second distance, L3 is the third distance, L0 is the length distance of the pole piece image along the pole piece transporting direction, i.e., the length of the pole piece image, and the labeling delay is determined when the first camera completes the collection of the next image of the pole piece mark hole image. According to this embodiment, the labeling delay is generated when the first camera completes the collection of the next image of the pole piece mark hole image, so that the influence of the calculation process and the transmission process of the labeling delay on labeling is avoided, and the labeling accuracy is improved.

According to the first aspect, the determining a labeling delay of the target pole piece according to the second distance includes: acquiring a camera frequency division parameter, a camera frequency multiplication parameter, and a visual detection precision; and determining the labeling delay of the target pole piece according to the second distance, the camera frequency division parameter, the camera frequency multiplication parameter, and the visual detection precision.

According to the first aspect, the determining the labeling delay of the target pole piece according to the second distance, the camera frequency division parameter, the camera frequency multiplication parameter, and the visual detection precision includes: calculating the labeling delay X according to a second formula, where the second formula is:

$$X = (L2 * U)/(P * M).$$

Where L2 is the second distance, U is the camera frequency division parameter, M is the camera frequency multiplication parameter, and P is the visual detection precision.

In an optional embodiment of the first aspect, the controlling the labeling of the target pole piece according to the labeling delay and the defect detection result includes: if the defect detection result shows that the target pole piece has defects, controlling a labeling machine at the labeling position to label the target pole piece after the labeling delay, so that the target pole piece is cut according to the labeling in the winding stage of the cell.

In an optional embodiment of the first aspect, the determining a defect detection result according to the pole piece image includes: detecting whether a pole piece image having defects on the target pole piece is present in the pole piece images or not; if the pole pieces image having defects on the target pole piece is present in the pole piece images, determining whether the pole piece image having defects is a pole piece mark hole image or not; and if the pole piece image having defects is a pole piece mark hole image, determining the defect detection result of the target pole piece according to the defect position in the pole piece mark hole image. According to this embodiment, when the defects are located on the pole piece mark hole image, the defect detection result of the target pole piece is determined according to the defect position in the pole piece mark hole image, so that the accuracy of the defect detection of the target pole piece is improved.

In an optional embodiment of the first aspect, the determining the defect detection result of the target pole piece according to the defect position in the pole piece mark hole image includes: determining whether the distance from the defect position to a first edge of the pole piece mark hole image is greater than the distance from the mark hole to the first edge or not, where the first edge is an image edge, close to the laser, of the pole piece mark hole image; if it is determined that the distance from the defect position to the first edge of the pole piece mark hole image is greater than the distance from the mark hole to the first edge, generating a defect detection result that the target pole piece has no defects and the previous pole piece of the target pole piece has defects; and if it is determined that the distance from the defect position to the first edge of the pole piece mark hole image is not greater than the distance from the mark hole to the first edge, a defect detection result that the target pole piece has defects is generated. According to this embodiment, when the distance from the defect position to the first edge of the pole piece mark hole image is greater than the distance from the mark hole to the first edge, a defect detection result that the target pole piece has no defects and the previous pole piece of the target pole piece has defects is generated; and when the distance from the defect position to the first edge of the pole piece mark hole image is not greater than the distance from the mark hole to the first edge, a defect detection result that the target pole piece has defects is generated, so that the accuracy of the defect detection of the target pole piece is improved.

In an optional embodiment of the first aspect, after detecting whether a pole piece image having defects on the target pole piece is present in the pole piece images or not, the method further includes: generating a defect detection result that the target pole piece has no defects if it is determined that the pole piece image having defects on the target polar piece is not present in the pole piece images.

In an optional embodiment of the first aspect, after determining whether a pole piece image having defects is a pole piece mark hole image or not, the method further includes: generating a defect detection result that the target pole piece has defects if it is determined that the pole piece image having defects is not a pole piece mark hole image.

In an optional embodiment of the first aspect, the pole piece image is obtained by shooting the target pole piece by a plurality of cameras, each camera corresponds to one pole piece mark hole image, and the plurality of cameras are sequentially disposed between the laser and the labeling position; the determining a labeling delay of the target pole piece according to the pole piece mark hole image includes: determining a corresponding labeling delay according to the pole piece mark hole image of the current camera when the current camera obtains a corresponding pole piece mark hole image by shooting; and updating a last labeling delay according to a labeling delay corresponding to the current camera, where the last labeling delay is determined by the pole piece mark hole image shot by the last camera on the target pole piece, the last camera is adjacent to the current camera, the distance between the last camera and the laser is less than the distance between the current camera and the laser. According to this embodiment, a plurality of cameras are disposed between the laser and the labeling position, so that the position and the labeling delay of the target pole piece are updated for a plurality of times, thereby further improving the accuracy of labeling.

In an optional embodiment of the first aspect, the plurality of cameras include a slitting camera, and the slitting camera is a camera closest to the labeling position in the plurality of cameras; and a distance between the slitting camera and the labeling position is a preset distance.

In an optimal embodiment of the first aspect, the preset distance is determined by the length of a single picture shot by the slitting camera and a standby length; and the standby length is determined according to signal transmission and labeling machine response time.

According to a second aspect, this application provides a pole piece labeling control device according to the features of claim 12. The pole piece labeling control device includes an acquisition module, a determination module and a control module. The acquisition module is configured to acquire a pole piece image of a target pole piece, where the pole piece image includes a pole piece mark hole image. The determination module is configured to determine a defect detection result according to the pole piece image, determine a first distance according to the pole piece mark hole image, where the first distance characterizes a distance from a mark hole in the pole piece mark hole image to an image edge, close to a labeling position, of the pole piece mark hole image, determines a second distance according to the first distance, where the second distance includes a distance from the mark hole in the pole piece mark hole image to the labeling position, and determines a labeling delay of the target pole piece according to the second distance. The control module is configured to control the labeling of the target pole piece according to the labeling delay and the defect detection result.

According to the pole piece labeling control device designed above, in this solution, the defect detection is carried out through the acquired pole piece image of the target pole piece, a defect detection result is determined, a first distance from a mark hole to an image edge, close to a labeling position, of the pole piece mark hole image is firstly determined through the acquired pole piece mark hole image of the target pole piece, and then a second distance from the mark hole in the pole piece mark hole image to the labeling position is calculated according to the first distance, so that the real-time position condition of the pole piece on the transfer of a compression roller is identified through the pole piece mark hole image, a labeling delay obtained through calculation based on the second distance is less affected by the relative movement of the pole piece and the compression roller, the accuracy of the labeling delay is improved, and the labeling position based on the labeling delay is more accurate.

According to the second aspect, the determination module is further specifically configured to acquire a third distance between the first camera and the labeling position, where the first camera is a camera that shoots a pole piece image of the target pole piece, and determine a second distance according to the third distance and the first distance.

In an optional embodiment of the second aspect, the determination module is further specifically configured to acquire a length of the pole piece image, and determine a second distance according to the third distance, the first distance, and the length of the pole piece image. In an optional implementation of the second aspect, the determination module is further specifically configured to calculate a second distance L2 according to a first formula, where the first formula is:

$$L2 = L3 - 2 * L0 + L1;$$

where L1 is the first distance, L2 is the second distance, L3 is the third distance, L0 is the length distance of the pole piece image along the pole piece transporting direction, i.e., the length of the pole piece image, and the labeling delay is determined when the first camera completes the collection of the next image of the pole piece mark hole image.

According to the second aspect, the determination module is further specifically configured to acquire a camera frequency division parameter, a camera frequency multiplication parameter, and a visual detection precision, and determine a labeling delay of the target pole piece according to the second distance, the camera frequency division parameter, the camera frequency multiplication parameter, and the visual detection precision.

According to the second aspect, the determination module is further specifically configured to calculate a labeling delay X according to a second formula, where the second formula is:

$$X = (L2 * U)/(P * M);$$

where L2 is the second distance, U is the camera frequency division parameter, M is the camera frequency multiplication parameter, and P is the visual detection precision.

In an optional embodiment of the second aspect, the control module is specifically configured to, if the defect detection result shows that the target pole piece has defects, control a labeling machine at the labeling position to label the target pole piece after a labeling delay, so that in the winding stage of the cell, the target pole piece is cut according to the labeling.

In an optional embodiment of the second aspect, the determination module is specifically configured to detect whether a pole piece image having defects on the target pole piece is present in the pole piece images or not. If the pole piece image having defects on the target pole piece is present in the pole piece images, the determination module determines whether a pole piece having defects is a pole piece mark hole image or not. If the pole piece image having defects is a pole piece mark hole image, the determination module determines a defect detection result of the target pole piece according to the defect position in the pole piece mark hole image. In an optional implementation of the second aspect, the determination module is further specifically configured to determine whether a distance from the defect position to the first edge of the pole piece mark hole image is greater than a distance from the mark hole to the first edge or not, where the first edge is an image edge, close to a laser, of the pole piece mark hole image. If it is determined that the distance from the defect position to the first edge of the pole piece mark hole image is greater than the distance from the mark hole to the first edge, a defect detection result that the target pole piece has no defects and the previous pole piece of the target pole piece has defects is generated. If it is determined that the distance from the defect position to the first edge of the pole piece mark hole image is not greater than the distance from the mark hole to the first edge, a defect detection result that the target pole piece has defects is generated. In an optional embodiment of the second aspect, the determination module is further specifically configured to, if it is determined that the pole piece image having defects on the target pole piece is not present in the pole piece images, generate a defect detection result that the target pole piece has no defects.

In an optional embodiment of the second aspect, the determination module is further specifically configured to, if it is determined that the pole piece image having defects is not a pole piece mark hole image, generate a defect detection result that the target pole piece has defects.

According to a third aspect, this application provides electronic equipment, including a memory and a processor. A computer program is stored in the memory. When the computer program is executed by the processor, the method in any one of optional embodiments of the first aspect and the second aspect is performed.

According to a fourth aspect, this application provides a computer-readable storage medium having a computer program stored thereon. When the computer program is executed by the processor, the method in any one of optional embodiments of the first aspect and the second aspect is performed.

According to a fifth aspect, this application provides a computer program product. When the computer program product runs on a computer, the computer performs the method in any one of optional embodiments of the first aspect and the second aspect.

The above description is only an overview of the technical solution of the embodiments of the utility model. The scope of the present invention is defined by the appended claims.

In order to more clearly understand the technical means of the embodiments of the utility model, the implementation may be carried out according to the content of the description. In order to make the above and other purposes, features and advantages of the embodiments of the utility model more obvious and understandable, the following is a detailed description of embodiments of this utility model.

## BRIEF DESCRIPTION OF DRAWINGS

Various other advantages and benefits will become apparent to those of ordinary skill in the art upon reading the following detailed description of the preferred embodiments. The drawings are only for the purpose of illustrating the preferred embodiments and are not to be construed as limiting this application. Also, like reference numerals are used to denote like parts throughout the drawings. In the drawings:

FIG. 1 is a schematic flow chart of a pole piece labeling control method according to an embodiment of this application;
FIG. 2 is an example diagram of a scenario according to an embodiment of this application;
FIG. 3 is a schematic diagram of a pole piece mark hole image according to an embodiment of this application;
FIG. 4 is a schematic diagram of a distance between a mark hole and a labeling position according to an embodiment of this application;
FIG. 5 is another example diagram of a scenario according to an embodiment of this application;
FIG. 6 is another schematic diagram of a distance between a mark hole and a labeling position according to an embodiment of this application;
FIG. 7 is a schematic diagram of a defect position on a pole piece mark hole image according to an embodiment of this application;
FIG. 8 is another schematic diagram of a defect position on a pole piece mark hole image according to an embodiment of this application;
FIG. 9 is a schematic structural diagram of a pole piece labeling control device according to an embodiment of this application; and
FIG. 10 is a schematic structural diagram of electronic equipment according to an embodiment of this application.

Reference numerals in detailed description of embodiments are as follows:

A - pole piece; B - passing roller; C - laser; D - slitting mechanism; E1, E2 - winding mechanism; F1, F2 - labeling machine; G1 - first camera; G2 - second camera; N - Nth image; N + 1 - N + 1th image; K - Kth pole piece; K + 1 - K + 1th pole piece; Q1, Q2 - mark hole; P1 - defect; 900 - acquisition module; 910 - determination module; 920 - control module; 10 - electronic equipment; 1001 - processor; 1002 - memory; 1003 - communication bus.

## DETAILED DESCRIPTION OF EMBODIMENTS

Embodiments of the technical solution of this application will be described in detail below in conjunction with the accompanying drawings. The following embodiments are only used to illustrate the technical solution of this application more clearly, and therefore are only examples, rather than limiting the protection scope of this application.

Unless otherwise defined, all technical and scientific terms used herein have the same meaning as commonly understood by those skilled in the technical field of this application; the terms used herein are only for the purpose of describing specific embodiments, and are not intended to limit this application; and the terms "comprising" and "having" and any variations thereof in the specification and claims of this application and the description of the above drawings are intended to cover a non-exclusive inclusion.

In the description of the embodiments of this application, technical terms such as "first", "second" and the like are only used to distinguish different objects, and should not be understood as indicating or implying relative importance or implicitly indicating the number, specific order or primary-secondary relationship of the indicated technical features. In the description of the embodiments of this application, "a plurality of" means more than two, unless otherwise specifically defined.

Reference herein to an "embodiment" means that a particular feature, structure, or characteristic described in connection with the embodiment may be included in at least one embodiment of this application. The occurrences of this phrase in various places in the specification are not necessarily all referring to the same embodiment, nor are separate or alternative embodiments mutually exclusive of other embodiments. It is understood explicitly and implicitly by those skilled in the art that the embodiments described herein may be combined with other embodiments.

In the description of the embodiments of this application, the term "and/or" is only an association relationship describing associated objects, which means that there may be three relationships, such as A and/or B, which may mean: A is present, A and B are present at the same time, and B is present. In addition, the character "/" herein generally indicates that the contextual objects are an "or" relationship.

In the description of the embodiments of this application, the term "multiple" refers to more than two (including two), similarly, "multiple groups" refers to more than two groups (including two groups), and "multiple pieces" refers to more than two pieces (including two pieces).

In the description of the embodiments of this application, the technical terms "center", "longitudinal", "lateral", "length", "width", "thickness", "upper", "lower", "front", "rear", "left", "right", "vertical" "horizontal", "top", "bottom", "inner", "outer", "clockwise", "counterclockwise", "axial", "radial", "circumferential", etc. indicate the orientation or positional relationship based on the orientation or positional relationship shown in the drawings is only for the convenience of describing the embodiment of this application and simplifying the description, and are not intended to indicate or imply that the device or element referred to must have a specific orientation, be constructed and operated in a specific orientation, and therefore cannot be understood as limiting the embodiments of this application.

In the description of this embodiment of this application, unless otherwise clearly specified and defined, technical terms such as "installation", "connected", "connection" and "fixation" should be interpreted in a broad sense, for example, they may be a fixed connection, or a detachable connection, or integration, may also be a mechanical connection, or an electrical connection, may be a direct connection, or an indirect connection through an intermediate medium, and may be the internal communication of two components or the interaction relationship between two components. Those of ordinary skill in the art can understand the specific meanings of the above terms in this embodiment of this application according to specific situations.

In the field of new energy batteries, a battery cell is made by winding or folding a certain length of a pole piece and a separator. In order to prevent a pole piece having defects from being involved in a cell and ensure the safety of the cell, it is necessary to detect the pole piece having defects. In the process of pole piece rolling and slitting, a visual detection system is usually used to detect defects of the pole piece. In the case of detecting that the pole piece has defects, the pole piece is labeled, and then in the winding stage of the cell, label paper may be identified in advance, and the pole piece having defects is automatically identified and cut off.

The inventor noticed that, due to the relative movement between the passing roller and the pole piece in the process of transmission movement of the pole piece, there is a deviation between the actual distance of the transmission movement of the pole piece and the pre-measured distance, which leads to a deviation in the labeling position, resulting in abnormal labeling.

In view of the above problems, the inventor researched and designed a pole piece labeling control method and device, electronic equipment, and a storage medium. A defect detection result is determined through the pole piece image of the target pole piece. A first distance from a mark hole to an image edge, close to a labeling position, of the pole piece mark hole image is firstly determined through the acquired pole piece mark hole image of the target pole piece, and then a second distance from the mark hole in the pole piece mark hole image to the labeling position is calculated according to the first distance, so that the real-time position condition of the pole piece on the transfer of a compression roller is identified through the pole piece mark hole image, a labeling delay obtained through the calculation based on the second distance is less affected by the relative movement of the pole piece and the compression roller, the accuracy of the labeling delay is improved, and the labeling position based on the labeling delay is more accurate.

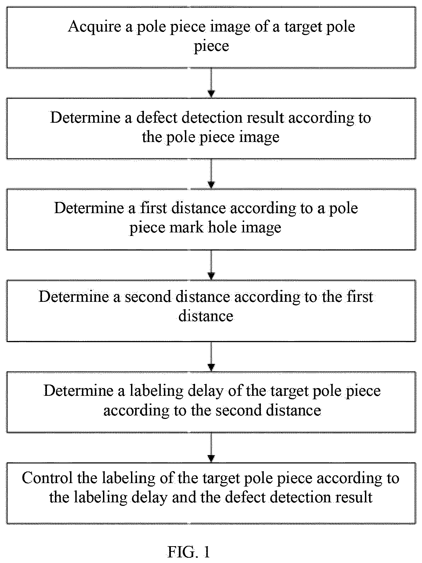

Based on the above ideas, this application provides a pole piece labeling control method. The pole piece labeling control method can be performed by a computing device. The computing device includes, but not limited to, computers, servers, controllers, chips, upper computers, etc., as shown in FIG. 1. The pole piece labeling control method may be implemented in the following ways.

Acquire a pole piece image of a target pole piece; determine a defect detection result according to the pole piece image; determine a first distance according to the pole piece mark hole image; determine a second distance according to the first distance; determine a labeling delay of the target pole piece according to the second distance; and control the labeling of the target pole piece according to the labeling delay and the defect detection result.

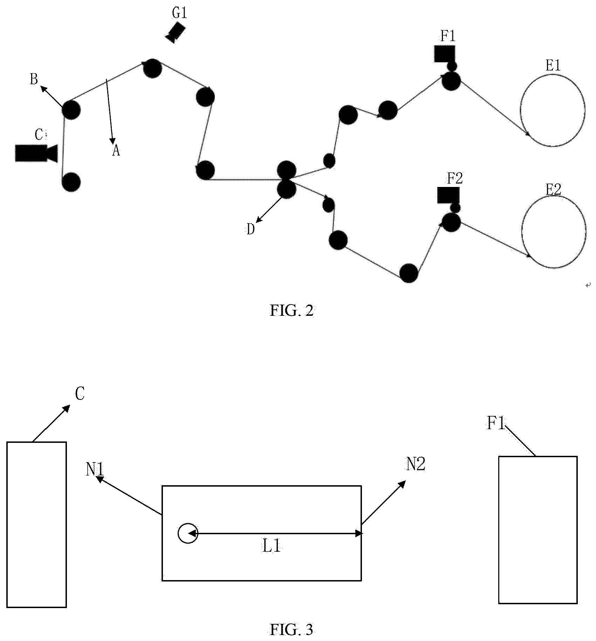

In the above embodiment, the target pole piece refers to a pole piece that needs defect detection at present, and determines whether to be labeled according to the defect detection result. In order to facilitate the understanding of this solution, the following specific implementation scenario is illustrated in this solution, as shown in FIG. 2. The pole piece A moves through the passing roller B, and then passes through the laser C and the slitting mechanism D for slitting, where the laser C will cut a mark hole (Mark hole) on the pole piece every certain distance, and the length of the pole piece between the two mark holes on pole piece A is the length of one cell pole piece. Generally, the mark hole firstly cut out on the pole piece is used as the beginning of the current pole piece. For example, the pole piece A is a pole piece between the mark holes Q1 and Q2, and if the mark hole Q1 is cut out before Q2, the mark hole Q1 is considered to be the mark hole of the pole piece A, the corresponding pole piece may be identified according to each mark hole, and the slitting mechanism divides the pole piece A into two halves, where one half is wound by the winding mechanism E1, and the other half is wound by the winding mechanism E2.

In order to prevent the pole piece having defects from being wound or folded to form a cell, before the pole piece is wound, the pole piece may be subjected to defect detection and labeled accordingly, and then the labeling may characterize whether the pole piece has defects or not, so that pole pieces having defects may be cut. As a specific example, as shown in FIG. 2, in this solution, the labeling machine F1 may be disposed before the winding mechanism E1, and the labeling machine F2 is disposed before the winding mechanism E2, so that the pole pieces are labeled by the labeling machines F1 and F2.

On the basis of the implementation scenario of an example, the target pole piece described in this embodiment refers to the pole piece corresponding to the length of the pole piece between the two mark holes (Mark hole) cut out by the laser C, and the pole piece image of the target pole piece may be acquired by shooting the moving target pole piece through the camera. Specifically, the pole piece image of the target pole piece may include an image of the whole section of the target pole piece from the mark hole cut out to the next mark hole. As a possible example, on the basis of the aforementioned implementation scenarios, in this solution, at least one camera is disposed between the laser C and the labeling machine F1/F2, as shown in FIG. 2. In this solution, the first camera G1 may be disposed. The target pole piece is shot by the first camera G1, so that the pole piece image of the target pole piece may be obtained, where the pole piece image may include the pole piece mark hole image of the target pole piece. According to the foregoing description, the mark hole at the beginning stage of the pole piece may identify the corresponding pole piece. On this basis, the pole piece mark hole image is the mark hole image at the beginning stage of the target pole piece. Of course, in addition to the pole piece mark hole image, the pole piece image may further include images of other positions of the target pole piece other than the mark hole.

It should be noted here that the above implementation scenario is only one of the scenarios illustrated for the convenience of understanding this solution, and the implementation scenario of this solution is not limited to the above one embodiment, and may also be any other scenario in the process of processing the cell pole piece.

On the basis of the above, in this solution, whether the target pole piece has defects or not is detected according to the obtained pole piece image of the target pole piece, and a defect detection result is determined. The defects of the pole piece may include, but are not limited to, defects such as foil leakage, particles, air bubbles, and pinholes in a coating area on the surface of the pole piece, defects such as pole piece bending, creasing, wrinkling, indentation, and dry cracking, and defects such as material dropping, notches, and cracks on the edges of the pole pieces. The defect detection result may be that the target pole piece has defects and the target pole piece has no defects. As a specific embodiment, in order to implement the rapid detection of the target pole piece, in this solution, the defect of the target pole piece is detected based on the pole piece image of the target pole piece through a pre-trained pole piece defect detection neural network model, so as to determine the defect detection result of the target pole piece. Specifically, in order to accurately cut the target pole piece having defects, it is necessary to accurately label the mark hole at the beginning of the target pole piece, so that the whole section of pole piece is cut. If the labeling position deviates, the pole piece is caused to have residue, which affects other pole pieces. In the traditional way, after the laser C cuts out the mark hole on the target pole piece, the initial labeling delay is sent to the labeling machine. However, since there is a certain distance between the laser C and the labeling machine, at this distance, the pole piece and the compression roller move relative to each other, resulting in inaccurate labeling by the labeling machine based on the initial labeling delay.

Based on this, in this solution, the first distance L1 is determined according to the pole piece mark hole image of the target pole piece. The first distance L1 characterizes the distance from the mark hole in the pole piece mark hole image to the image edge, close to the labeling position, of the target pole piece image. As an example, the pole piece mark hole image shown in FIG. 3 is used, and the edge of N2 of the image in the pole piece mark hole image is the edge of the image close to the labeling position. The first distance L1 is the distance from the mark hole to the edge of N2. Optionally, the first distance L1 may include the distance from an end point, close to the side of N2, of the mark hole to the edge of N2, or the distance from the center point of the mark hole to the edge of N2, or the distance from any point on the mark hole to the edge of N2, which is not defined in this embodiment of this application. Optionally, the distance between the mark hole and the edge of N2 may be the vertical distance from any point in the mark hole to the edge of N2, or the straight-line distance from any point in the mark hole to any point on the edge of N2, which is not defined in this embodiment of this application.

On the basis of determining the first distance L1, in this solution, the second distance L2 is determined according to the first distance L1. The second distance L2 characterizes the distance from the mark hole (Mark hole) of the target pole piece in the pole piece mark hole image to the labeling position. For example, according to the distance from the mark hole (Mark hole) of the target pole piece to the labeling machine F1 in the scenario in FIG. 2 and the second distance L2, the labeling delay of the target pole piece is determined. Optionally, the second distance L2 may be the distance from any point on the mark hole to the labeling position, which is not defined in this embodiment. Optionally, the selected point position for determining the second distance L2 on the mark hole may be consistent with the selected point position for determining the first distance L1, which is not defined in this embodiment of this application. The labeling delay may be a delay time length, which means that the labeling will be performed after the delay time length from the current time. In this solution, a camera is disposed between the laser and the labeling position, and the pole piece image of the target pole piece is acquired by the camera. Then, based on the pole piece mark hole image acquired by the camera, the first distance from the mark hole to the image edge, close to the labeling position, of the pole piece mark hole image is firstly determined, and then the second distance from the mark hole in the pole piece mark hole image to the labeling position is calculated according to the first distance, so that the real-time position condition of the pole piece on the transfer of a compression roller is identified through the pole piece mark hole image, a labeling delay obtained through the calculation based on the second distance is less affected by the relative movement of the pole piece and the compression roller, the accuracy of the labeling delay is improved, and the labeling position based on the labeling delay is more accurate.

In the case of the defect detection result and labeling delay obtained above, in this solution, the labeling of the target pole piece is controlled according to the labeling delay and the defect detection result. For example, assuming that a pole piece having defects needs to be labeled, the labeled pole piece is cut by a subsequent process. On this basis, if the identified defect detection result shows that the target pole piece has defects, the target pole piece will be labeled after the labeling delay. If the identified defect detection result has no defects, the target pole piece will not be labeled after the labeling delay.

According to the pole piece labeling control method designed above, in this solution, the defect detection is carried out through the acquired pole piece image of the target pole piece, a defect detection result is determined, a first distance from a mark hole to an image edge, close to a labeling position, of the pole piece mark hole image is firstly determined through the acquired pole piece mark hole image of the target pole piece, and then a second distance from the mark hole in the pole piece mark hole image to the labeling position is calculated according to the first distance, so that the real-time position condition of the pole piece on the transfer of a compression roller is identified through the pole piece mark hole image, a labeling delay obtained through the calculation based on the second distance is less affected by the relative movement of the pole piece and the compression roller, the accuracy of the labeling delay is improved, and the labeling position based on the labeling delay is more accurate.

In an optional implementation of this embodiment, as a possible implementation, for the determination of the second distance according to the first distance described above, in this solution, a third distance L3 between the first camera that captures the pole piece image of the target pole piece and the labeling position may be firstly acquired, and then the second distance L2 is determined according to the third distance L3 and the first distance L1. Since the first camera is fixed, and the position of the labeling machine at the labeling position is also fixed, the distance between the first camera and the labeling position, that is, the third distance L3, is a fixed value. Optionally, the third distance L3 may be measured in advance, and then prestored in the computing device. The third distance may be called directly when the first distance L1 is calculated, which is not defined in this embodiment of this application.

Specifically, in this solution, the length L0 of the pole piece image may be acquired, and the second distance L2 is determined according to the third distance L3, the first distance L1 and the length L0 of the pole piece image. As a possible implementation, in this solution, during the calculation of the labeling delay and the transmission process of the labeling delay, the target pole piece also moves on the compression roller at the same time. Therefore, in this solution, the labeling delay is generated when the first camera completes the collection of the next pole piece image of the pole piece mark hole image, thereby reducing the influence of the calculation process and transmission time on the labeling time. On this basis, in this scheme, the second distance L2 is calculated according to the first formula, where the first formula is:

$$L2 = L3 - 2 * L0 + L1;$$

wherein L1 is the first distance, L2 is the second distance, L3 is the third distance, and L0 is the length distance of the pole piece image along the pole piece transporting direction, i.e., the length of the pole piece image.

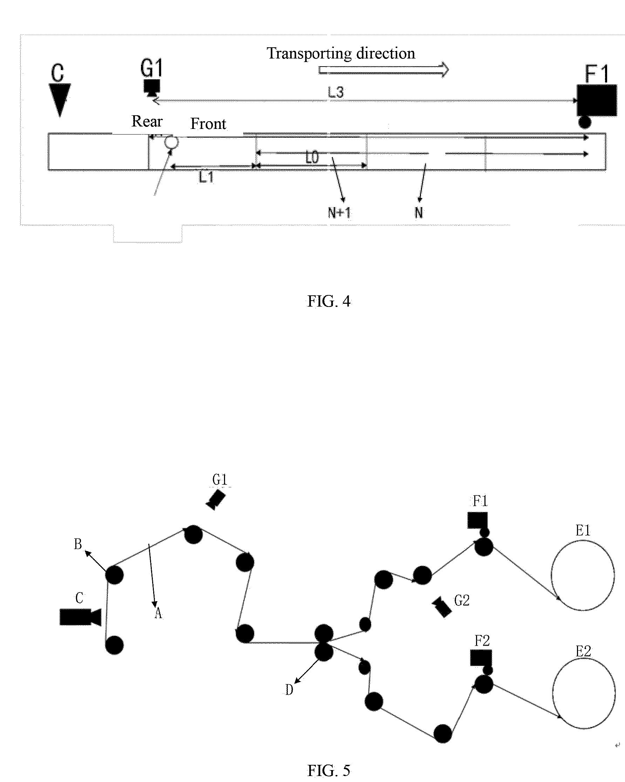

The above calculation process may be represented by the algorithm model shown in FIG. 4. In FIG. 4, L1 is the first distance from the mark hole of the target pole piece to the image edge, close to the labeling position, of the pole piece mark hole image, L0 is the length distance of the pole piece image along the pole piece transporting direction, L3 is the distance between the first camera and the labeling position, N represents the Nth image obtained by shooting, and N+1 represents the N+1th image obtained by shooting.

As another possible implementation, when the calculation process is fast enough, in this solution, the labeling delay is generated when the first camera completes the collection of the pole piece mark hole image. On this basis, in this solution, the second distance L2 may be calculated according to the following formula, which is:

$$L2 = L3 - L0 + L1;$$

wherein L1 is the first distance, L2 is the second distance, L3 is the third distance, and L0 is the length distance of the pole piece image along the pole piece transporting direction, i.e., the length of the pole piece image.

On the basis of obtaining the second distance L2 through calculation by the above method, it is assumed that in this solution, a labeling signal is sent to the labeling machine according to the pulse of an encoder. On this basis, in this solution, the camera frequency division parameter, the camera frequency multiplication parameter and the visual detection precision may be acquired, and then the labeling delay is calculated according to the calculated first distance, the camera frequency division parameter, the camera frequency multiplication parameter and the visual detection precision, so that the encoder may wait for the labeling delay and then send pulses to the labeling machine to label the labeling machine.

Specifically, in this solution, the labeling delay X may be calculated according to the second formula, where the second formula is:

$$X = (L2 * U)/(P * M);$$

where L2 is the first distance, U is the camera frequency division parameter, M is the camera frequency multiplication parameter, and P is the visual detection precision.

As a possible embodiment, in this solution, when the laser has completed the forming of mark holes for the target pole piece, the laser has already sent an initial labeling delay to the encoder. On this basis, in this solution, the initial labeling delay may be updated based on the calculated labeling delay.

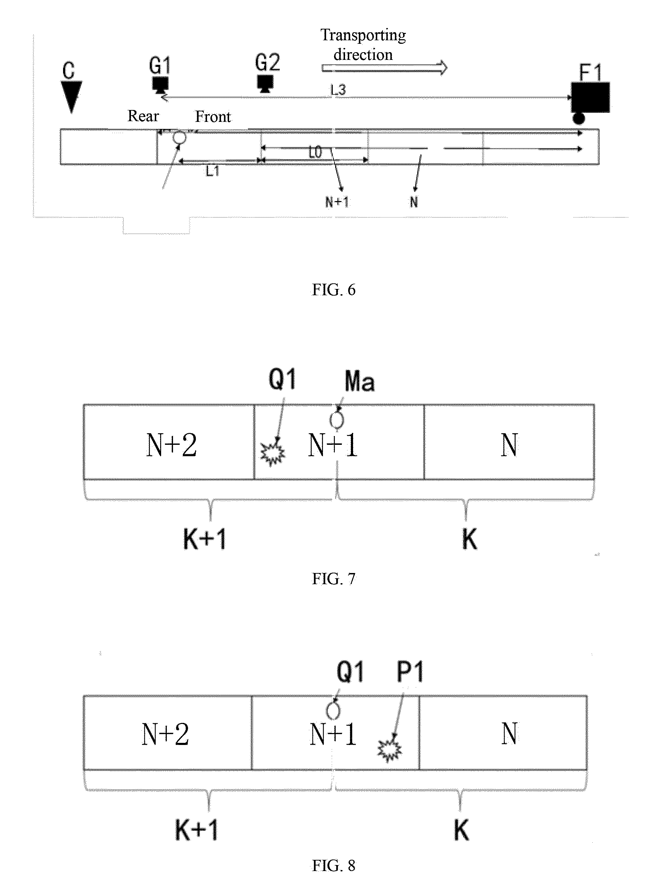

As yet another possible embodiment, in this solution, multiple cameras may be disposed between the laser and the labeling position, which may be specifically shown in the example scenarios shown in FIGs. 5 and 6. The multiple cameras are sequentially disposed between the laser and the labeling machine F1/F2. On this basis, the target pole piece will pass through the multiple cameras in sequence during the movement, that is, each camera will shoot the target pole piece, so as to obtain the pole piece image corresponding to the target pole piece. Therefore, when each camera shoots the pole piece mark hole image of the target pole piece, it can identify the distance between the pole piece mark hole of the target pole piece and the labeling position in the aforementioned manner according to the corresponding pole piece mark hole image, so as to calculate the corresponding labeling delay when the mark hole of the target pole piece passes through the camera to update the last labeling delay. For example, as shown in FIG. 5, the second camera G2 is adjacent to the first camera G1. When passing through the first camera G1, the mark hole of the target pole piece is shot by the first camera G1. According to the pole piece mark hole image of the target pole piece shot by the first camera G1, the labeling delay corresponding to the first camera G1 may be calculated, and then the target pole piece continues to move under the compression roller. When the mark hole of the target pole piece passes through the second camera G2, the second camera G2 may shoot the pole piece mark hole image of the target pole piece, and then the labeling delay corresponding to the second camera G2 may be calculated. In order to prevent inaccurate labeling caused by relative movement between the pole piece and the compression roller between the first camera G1 and the second camera G2, according to this solution, the labeling delay corresponding to the first camera is updated according to the labeling delay corresponding to the second camera G2, so that the labeling delay is more accurate.

It should be noted here that, when there are multiple cameras, the manner in which each camera determines the corresponding labeling delay is the same as the manner in which the first camera G1 determines the labeling delay, which is not described here.

In an optional implementation of this embodiment, on the basis of using multiple cameras, the multiple cameras may include a slitting camera, for example, the second camera G2 is a slitting camera, the slitting camera is a camera closest to the labeling position in the multiple cameras, the slitting camera shoots the slit pole piece, and on this basis, the distance between the slitting camera and the labeling position is the preset distance. The preset distance is determined by the length of a single picture shot by the slitting camera and the standby length. The standby length is determined according to the signal transmission and labeling machine response time. The length of the single picture is obtained by multiplying the single-pixel precision and the row pixels of the image captured by the slitting camera.

The preset distance may be calculated in the following way, where preset distance=single picture length*2+standby length. The preset distance is explained with the following examples. A die-cutting and slitting all-in-one machine needs to label at M1 (mm) in front of the mark hole. The picture collected by the visual detection system is composed of T rows of pixels. The single-pixel precision is Y1 (mm/pixel). The signal transmission and labeling machine response time is calculated in Z1 (ms). The maximum operating speed of the die-cutting and slitting machine is Vmax mm/min. Then the preset distance may be calculated as: preset distance = Y1*T*2+M1+Z1 * Vmax=Y1*2T+M1+Vmax*Z1 (mm).

In an optional embodiment of this embodiment, the mark hole at the beginning of the pole piece described above characterizes the corresponding pole piece. On this basis, in order to make the labeling accurate, it is necessary to distinguish the positional relationship between the defect and the mark hole, and different positional relationships produce different defect identification results. Therefore, for step S110, in this solution, whether a pole piece image having defects on the target pole piece is present in the pole piece images or not may be firstly detected. If the pole piece image having defects is not present in the pole piece images, it is considered that the target pole piece has no defects.

If a pole piece image having defects is present in the pole piece images, it is determined whether the image having defects is a pole piece mark hole image or not. If the pole piece image having defects is not a pole piece mark hole image, it indicates that a pole piece segment of the target pole piece has defects, thereby generating a defect detection result that the target pole piece has defects.

If the pole piece image having defects is the pole piece mark hole image, the defect detection result of the target pole piece is further determined according to the defect position in the pole piece mark hole image.

As a possible embodiment, in this solution, whether the distance from a defect position to a first edge of the pole piece mark hole image is greater than a distance from a mark hole to the first edge or not may be firstly determined, where the first edge is an image edge, close to a laser, of the pole piece mark hole image, for example, the edge of N1 in FIG. 3. If it is determined that the distance from the defect position to the first edge of the pole piece mark hole image is greater than the distance from the mark hole to the first edge, it indicates that the defect is behind the mark hole of the target pole piece, thereby generating a defect detection result that the target pole piece have no defects and the previous pole piece of the target pole piece has defects. If the distance from the defect position to the first edge of the pole piece mark hole image is not greater than the distance from the mark hole to the first edge, it indicates that the defect is on the target pole piece, thereby generating a defect detection result that the target pole piece has defects.

As a possible example, as shown in FIG. 7 and FIG. 8, K represents the Kth pole piece, K+1 represents the K+1th pole piece, Q1 represents the mark hole, and P1 represents the defect. FIG. 7 is a schematic diagram of a defect P1 before a mark hole Q1 (the distance from the defect position to the first edge of the pole piece mark hole image is not greater than the distance from the mark hole to the first edge). FIG. 8 is a schematic diagram of a defect P1 after a mark hole Q1 (the distance from the defect position to the first edge of the pole piece mark hole image is greater than the distance from the mark hole to the first edge), so that based on the above method, it can be concluded that a defect detection result that the target pole piece has defects may be obtained based on FIG. 7, and a defect detection result that the target pole piece has no defects and the previous pole piece of the target pole piece has defects is obtained based on FIG.8.

In addition, it should be noted here that when multiple cameras are configured to shoot, the multiple cameras set in this solution may respectively shoot the front and back of the pole piece, so as to summarize the image detection results of all cameras to determine whether the target pole piece has defects or not. For example, in FIG. 5, the first camera G1 and the second camera G2 respectively shoot different faces of the target pole piece. On this basis, in this solution, a defect detection result that whether the target pole piece has defects or not is identified based on the pole piece image shot by the first camera G1, and a defect detection result that whether the target pole piece has defects or not is identified based on the pole piece image shot by the second camera G2, and then whether the target pole piece has defects or not is determined by the defect detection results of the first camera G1 and the second camera G2 .

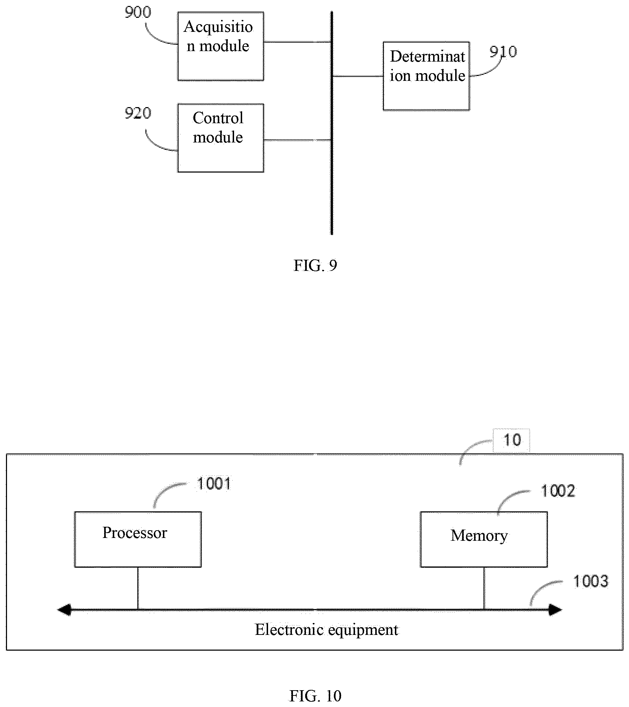

FIG. 9 shows a schematic structural block diagram of a pole piece labeling control device provided by this application. It should be understood that the device corresponds to the embodiments of the method performed in FIG. 1 and FIG. 8, and can perform the steps involved in the aforementioned methods. For specific functions of the device, reference may be made to the above description to avoid repetition, and detailed descriptions are appropriately omitted here. The device includes at least one software function module that can be stored in a memory in the form of software or firmware or solidified in an operating system (OS) of the device. Specifically, the device includes: an acquisition module 900, a determination module 910 and a control module 920. The acquisition module 900 is configured to acquire a pole piece image of a target pole piece, where the pole piece image includes a pole piece mark hole image. The determination module 910 is configured to determine a defect detection result according to the pole piece image, determine a first distance according to the pole piece mark hole image, where the first distance characterizes a distance from a mark hole in the pole piece mark hole image to an image edge, close to a labeling position, of the pole piece mark hole image, determine a second distance according to the first distance, where the second distance includes a distance from the mark hole in the pole piece mark hole image to the labeling position, and determine a labeling delay of the target pole piece according to the second distance. The control module 920 is configured to control the labeling of the target pole piece according to the labeling delay and the defect detection result.

According to the pole piece labeling control device designed above, in this solution, the defect detection is carried out through the acquired pole piece image of the target pole piece, a defect detection result is determined, a first distance from a mark hole to an image edge, close to a labeling position, of the pole piece mark hole image is firstly determined through the acquired pole piece mark hole image of the target pole piece, and then a second distance from the mark hole in the pole piece mark hole image to the labeling position is calculated according to the first distance, so that the real-time position condition of the pole piece on the transfer of a compression roller is identified through the pole piece mark hole image, a labeling delay obtained through calculation based on the second distance is less affected by the relative movement of the pole piece and the compression roller, the accuracy of the labeling delay is improved, and the labeling position based on the labeling delay is more accurate.

According to some embodiments of this application, the determination module 910 is further specifically configured to acquire a third distance between the first camera and the labeling position, where the first camera is a camera that shoots multiple pole piece images of the target pole piece, and determine the second distance according to the third distance and the first distance.

According to some embodiments of this application, the determination module 910 is further specifically configured to acquire a length of the pole piece image, and determine the second distance according to the third distance, the first distance, and the length of the pole piece image. According to some embodiments of this application, the determination module 910 is further specifically configured to calculate a second distance L2 according to a first formula, where the first formula is:

$$L2 = L3 - 2 * L0 + L1;$$

where L1 is the first distance, L2 is the second distance, L3 is the third distance, L0 is the length of the pole piece image, and the labeling delay is determined when the first camera completes the collection of the next image of the pole piece mark hole image.

According to some embodiments of this application, the determination module 910 is further specifically configured to acquire a camera frequency division parameter, a camera frequency multiplication parameter, and visual detection precision, and determine a labeling delay of the target pole piece according to the second distance, the camera frequency division parameter, the camera frequency multiplication parameter, and the visual detection precision.

According to some embodiments of this application, the determination module 910 is further specifically configured to calculate the labeling delay X through a second formula, where the second formula is:

$$X = (L2 * U)/(P * M);$$

where L2 is the second distance, U is the camera frequency division parameter, M is the camera frequency multiplication parameter, and P is the visual detection precision.

According to some embodiments of this application, the control module 920 is specifically configured to, if the defect detection result shows that the target pole piece has defects, control a labeling machine at the labeling position to label the target pole piece after the labeling delay, so that in the winding stage of the cell, the target pole piece is cut according to the labeling.

According to some embodiments of this application, the determination module 910 is specifically configured to detect whether a pole piece image having defects on the target pole piece is present in the pole piece images or not. If the pole piece image having defects on the target pole piece is present in the pole piece images, the determination module 910 determines whether a pole piece image having defects is a pole piece mark hole image or not. If the pole piece image having defects is a pole piece mark hole image, the determination module 910 determines a defect detection result of the target pole piece according to the defect position in the pole piece mark hole image.

According to some embodiments of this application, the determination module 910 is further specifically configured to determine whether a distance from the defect position to the first edge of the pole piece mark hole image is greater than a distance from the mark hole to the first edge or not, where the first edge is an image edge, close to a laser, of the pole piece mark hole image. If it is determined that the distance from the defect position to the first edge of the image of the pole piece mark hole is greater than the distance from the mark hole to the first edge, a defect detection result that the target pole piece has no defects and the previous pole piece of the target pole piece has defects is generated. If it is determined that the distance from the defect position to the first edge of the image of the pole piece mark hole is not greater than the distance from the mark hole to the first edge, a defect detection result that the target pole piece has defects is generated.

According to some embodiments of this application, the determining module 910 is further specifically configured to, if it is determined that a pole piece image having defects on the target pole piece is not present in the pole piece images, generate a defect detection result that the target pole piece have no defects.

According to some embodiments of this application, the determination module 910 is further specifically configured to, if it is determined that the pole piece image having defects is not a pole piece mark hole image, generate a defect detection result that the target pole piece has defects.

According to some embodiments of this application, as shown in FIG. 10, this application provides electronic equipment 10, including: a processor 1001 and a memory 1002. The processor 1001 and the memory 1002 are interconnected and communicate with each other through a communication bus 1003 and/or other forms of connection mechanisms (not shown). The memory 1002 stores a computer program executable by the processor 1001. When the computing device is running, the processor 1001 executes the computer program, so as to perform the method performed in the foregoing implementations during execution. For example, step S100 to step S150: acquiring a pole piece image of the target pole piece; determining a defect detection result according to the pole piece image; determining a first distance according to the pole piece mark hole image; determining a second distance according to the first distance; determining a labeling delay of the target pole piece according to the second distance; and controlling the labeling of the target pole piece according to the labeling delay and the defect detection result.

This application provides a computer-readable storage medium having a computer program stored thereon. When the computer program is executed by a processor, the aforementioned method is performed.

The storage medium can be implemented by any type of volatile or non-volatile storage device or their combination, such as static random access memory (referred to as SRAM), electrically erasable programmable read-only memory (referred to as EEPROM), erasable programmable read only memory (referred to as EPROM), programmable read-only memory (referred to as PROM), read-only memory (referred to as ROM), magnetic memory, flash memory, magnetic disk or optical disk.

This application provides a computer program product. When the computer program product runs on a computer, the computer performs the aforementioned method.

Finally, it should be noted that: the above embodiments are only used to illustrate the technical solutions of this application, and are not intended to limit it.

## Claims

1. A pole piece labeling control method, comprising

acquiring a pole piece image of a target pole piece, wherein the pole piece image comprises a pole piece mark hole image;
determining a defect detection result according to the pole piece image;
determining a first distance according to the pole piece mark hole image, wherein the first distance characterizes a distance from a mark hole (Q1/Q2) in the pole piece mark hole image to an image edge, close to a labeling position, of the pole piece mark hole image;
determining a second distance according to the first distance, wherein the second distance comprises a distance from the mark hole (Q1/Q2) in the pole piece mark hole image to the labeling position;
determining a labeling delay of the target pole piece according to the second distance; and
controlling labeling of the target pole piece according to the labeling delay and the defect detection result, wherein
the step of determining a second distance according to the first distance comprises:

acquiring a third distance between a first camera and the labeling position, wherein the first camera is a camera that shoots the pole piece image of the target pole piece; and
determining the second distance according to the third distance and the first distance;

and

wherein the step of determining a labeling delay of the target pole piece according to the second distance comprises:

acquiring a camera frequency division parameter, a camera frequency multiplication parameter, and a visual detection precision; and
determining the labeling delay of the target pole piece according to the second distance, the camera frequency division parameter, the camera frequency multiplication parameter, and the visual detection precision; wherein the labeling delay X is calculated according to a second formula, which is:

$$X=(L2*U)/(P*M),$$

wherein L2 is the second distance, U is the camera frequency division parameter, M is the camera frequency multiplication parameter, and P is the visual detection precision.

2. The method according to claim 1, **characterized in that** the determining the second distance according to the third distance and the first distance comprises:
acquiring a length of the pole piece image; and determining the second distance according to the third distance, the first distance, and the length of the pole piece image.

3. The method according to claim 1 or 2, **characterized in that** the determining the second distance according to the third distance, the first distance, and the length of the pole piece image comprises:

calculating the second distance L2 according to a first formula, wherein the first formula is:

$$L2=L3-2*L0+L1,$$

wherein L1 is the first distance, L2 is the second distance, L3 is the third distance, L0 is a length distance of the pole piece image in a pole piece transporting direction, and the labeling delay is generated when the first camera completes collection of a next image of the pole piece mark hole image.

4. The method according to claim 1, **characterized in that** the controlling labeling of the target pole piece according to the labeling delay and the defect detection result comprises:
under a condition that the defect detection result shows that the target pole piece has defects (P1), controlling a labeling machine (F1/F2) at the labeling position to label the target pole piece after the labeling delay, so that the target pole piece is cut according to the labeling in a winding stage of a cell.

5. The method according to claim 1, **characterized in that** the determining a defect detection result according to the pole piece image comprises:

detecting whether a pole piece image having defects (P1) on the target pole piece is present in the pole piece image or not;
under a condition that the pole piece image having defects (P1) on the target pole piece is present in the pole piece image, determining whether the pole piece image having defects (P1) is the pole piece mark hole image or not; and
under a condition that the pole piece image having defects (P1) is the pole piece mark hole image, determining the defect detection result of the target pole piece according to a defect position in the pole piece mark hole image.

6. The method according to claim 5, **characterized in that** the determining the defect detection result of the target pole piece according to the defect position in the pole piece mark hole image comprises:

determining whether a distance from the defect position to a first edge of the pole piece mark hole image is greater than that from the mark hole (Q1/Q2) to the first edge or not, wherein the first edge is an image edge, close to a laser (C), of the pole piece mark hole image;
under a condition that it is determined that the distance from the defect position to the first edge of the pole piece mark hole image is greater than that from the mark hole (Q1/Q2) to the first edge, generating a defect detection result that the target pole piece has no defect (P1) and a previous pole piece of the target pole piece has defects (P1); and
under a condition that it is determined that the distance from the defect position to the first edge of the pole piece mark hole image is not greater than the distance from the mark hole (Q1/Q2) to the first edge, generating a defect detection result that the target pole piece has defects (P1).

7. The method according to claim 5, **characterized in that** after detecting whether a pole piece image having defects (P1) on the target pole piece is present in the pole piece image or not, the method further comprises:
under a condition that it is determined that the pole piece image having defects (P1) on the target pole piece is not present in the pole piece image, generating a defect detection result that the target pole piece has no defect (P1).

8. The method according to claim 5, **characterized in that** after determining whether the pole piece image having defects (P1) is the pole piece mark hole image or not, the method further comprises:
under a condition that it is determined that the pole piece image having defects (P1) is not the pole piece mark hole image, generating a defect detection result that the target pole piece has defects (P1).

9. The method according to claim 1, **characterized in that** the pole piece image is obtained by shooting the target pole piece by a plurality of cameras, each camera corresponds to one pole piece mark hole image, and the plurality of cameras are sequentially disposed between a laser (C) and the labeling position; and
the determining a labeling delay of the target pole piece according to the pole piece mark hole image comprises:

determining a corresponding labeling delay according to the pole piece mark hole image of a current camera when the corresponding pole piece mark hole image is obtained through shooting by the current camera; and
updating a previous labeling delay according to the labeling delay corresponding to the current camera, wherein the previous labeling delay is determined by the pole piece mark hole image shot by a previous camera on the target pole piece, the previous camera is a camera adjacent to the current camera, and a distance between the previous camera and the laser (C) is less than that between the current camera and the laser (C).

10. The method according to claim 9, **characterized in that** the plurality of cameras comprises a slitting camera, and the slitting camera is a camera closest to the labeling position in the plurality of cameras; and a distance between the slitting camera and the labeling position is a preset distance.

11. The method according to claim 10, **characterized in that** the preset distance is determined by a length of a single picture shot by the slitting camera and a standby length; and the standby length is determined according to signal transmission and response time of a labeling machine (F1/F2).

12. A pole piece labeling control device, comprising an acquisition module (900), a determination module (910), and a control module (920);

the acquisition module (900) is configured to acquire a pole piece image of a target pole piece, wherein the pole piece image comprises a pole piece mark hole image;
the determination module (910) is configured to determine a defect detection result according to the pole piece image, determine a first distance according to the pole piece mark hole image, wherein the first distance characterizes a distance from a mark hole (Q1/Q2) in the pole piece mark hole image to an image edge, close to a labeling position, of the pole piece mark hole image, determine a second distance according to the first distance, wherein the second distance comprises a distance from the mark hole (Q1/Q2) in the pole piece mark hole image to the labeling position, and determine a labeling delay of the target pole piece according to the second distance; and
the control module (920) is configured to control labeling of the target pole piece according to the labeling delay and the defect detection result, wherein in the process of determining the second distance according to the first distance, the determination module (910) is configured to acquire a third distance between a first camera and the labeling position, wherein the first camera is a camera that shoots the pole piece image of the target pole piece; and to determine the second distance according to the third distance and the first distance; and
wherein, in the process of determining the labeling delay of the target pole piece according to the second distance, the determination module (910) is configured to acquiring a camera frequency division parameter, a camera frequency multiplication parameter, and a visual detection precision; wherein the determination module (910) is further configured to calculate the labeling delay X according to a second formula, which is:

$$X=(L2*U)/(P*M),$$

wherein L2 is the second distance, U is the camera frequency division parameter, M is the camera frequency multiplication parameter, and P is the visual detection precision.

13. Electronic equipment (10), comprising a memory (1002) and a processor (1001), the memory (1002) storing a computer program, and **characterized in that** when the computer program is executed by the processor (1001), the method according to any one of claims 1-11 is implemented.

14. A computer-readable storage medium storing a computer program thereon, **characterized in that** when the computer program is executed by a processor (1001), the method according to any one of claims 1-11 is implemented.

## Patentansprüche

**1.** Polstückbeschriftungs-Steuerverfahren, umfassend

Erfassen eines Polstückbildes eines Zielpolstücks, wobei das Polstückbild ein Polstück-Markierungslochbild umfasst;
Bestimmen eines Fehlererkennungsergebnisses gemäß des Polstückbildes;
Bestimmen eines ersten Abstands gemäß dem Polstück-Markierungslochbild, wobei der erste Abstand einen Abstand von einem Markierungsloch (Q1/Q2) in dem Polstück-Markierungslochbild zu einer Bildkante nahe einer Beschriftungsposition des Polstück-Markierungslochbildes kennzeichnet;
Bestimmen eines zweiten Abstands gemäß dem ersten Abstand, wobei der zweite Abstand einen Abstand von dem Markierungsloch (Q1/Q2) in dem Polstück-Markierungslochbild zu der Beschriftungsposition umfasst;
Bestimmen einer Beschriftungsverzögerung des Zielpolstücks gemäß dem zweiten Abstand; und
Steuern der Beschriftung des Zielpolstücks gemäß der Beschriftungsverzögerung und dem Fehlererkennungsergebnis, wobei
der Schritt des Bestimmens eines zweiten Abstands gemäß dem ersten Abstand Folgendes umfasst:

Erfassen eines dritten Abstands zwischen einer ersten Kamera und der Beschriftungsposition, wobei die erste Kamera eine Kamera ist, die das Polstückbild des Zielpolstücks aufnimmt; und
Bestimmen des zweiten Abstands gemäß dem dritten Abstand und dem ersten Abstand; und
wobei der Schritt des Bestimmens einer Beschriftungsverzögerung des Zielpolstücks gemäß dem zweiten Abstand Folgendes umfasst:

Erfassen eines Kamerafrequenz-Teilungsparameters, eines Kamerafrequenz-Multiplikationsparameters und einer visuellen Erkennungsgenauigkeit; und
Bestimmen der Beschriftungsverzögerung des Zielpolstücks gemäß dem zweiten Abstand, dem Kamerafrequenz-Teilungsparameter, dem Kamerafrequenz-Multiplikationsparameter und der visuellen Erkennungsgenauigkeit; wobei die Beschriftungsverzögerung X gemäß einer zweiten Formel berechnet wird, die lautet:

$$X=(L2*U)/(P*M),$$

wobei L2 der zweite Abstand, U der Kamerafrequenz-Teilungsparameter, M der Kamerafrequenz-Multiplikationsparameter und P die visuelle Erkennungsgenauigkeit ist.

**2.** Verfahren nach Anspruch 1, **dadurch gekennzeichnet, dass** das Bestimmen des zweiten Abstands gemäß dem dritten Abstand und dem ersten Abstand Folgendes umfasst:
Erfassen einer Länge des Polstückbildes; und Bestimmen des zweiten Abstands gemäß dem dritten Abstand, dem ersten Abstand und der Länge des Polstückbildes.

**3.** Verfahren nach Anspruch 1 oder 2, **dadurch gekennzeichnet, dass** das Bestimmen des zweiten Abstands gemäß dem dritten Abstand, dem ersten Abstand und der Länge des Polstückbildes Folgendes umfasst:

Berechnen des zweiten Abstands L2 gemäß einer ersten Formel, wobei die erste Formel lautet:

$$L2=L3-2*L0+L1,$$

wobei L1 der erste Abstand ist, L2 der zweite Abstand ist, L3 der dritte Abstand ist, L0 ein Längenabstand des Polstückbildes in einer Polstück-Transportrichtung ist und die Beschriftungsverzögerung erzeugt wird, wenn die erste Kamera die Sammlung eines nächsten Bildes des Polstück-Markierungslochbildes abschließt.

**4.** Verfahren nach Anspruch 1, **dadurch gekennzeichnet, dass** das Steuern der Beschriftung des Zielpolstücks gemäß der Beschriftungsverzögerung und dem Fehlererkennungsergebnis Folgendes umfasst:
unter der Bedingung, dass das Fehlererkennungsergebnis zeigt, dass das Zielpolstück Fehler (P1) aufweist, Steuern einer Beschriftungsmaschine (F1/F2) an der Beschriftungsposition, um das Zielpolstück nach der Beschriftungsverzögerung zu beschriften, so dass das Zielpolstück gemäß der Beschriftung in einer Wickelstufe einer Zelle geschnitten wird.

5. Verfahren nach Anspruch 1, **dadurch gekennzeichnet, dass** das Bestimmen eines Fehlererkennungsergebnisses gemäß dem Polstückbild Folgendes umfasst:

Erkennen, ob ein Polstückbild, das Fehler (P1) aufweist, auf dem Zielpolstück in dem Polstückbild vorhanden ist oder nicht;
unter der Bedingung, dass das Polstückbild, das Fehler (P1) aufweist, auf dem Zielpolstück in dem Polstückbild vorhanden ist, Bestimmen, ob das Polstückbild, das Fehler (P1) aufweist, das Polstück-Markierungslochbild ist oder nicht; und
unter der Bedingung, dass das Polstückbild, das Fehler (P1) aufweist, das Polstück-Markierungslochbild ist, Bestimmen des Fehlererkennungsergebnisses des Zielpolstücks gemäß einer Fehlerposition in dem Polstück-Markierungslochbild.

6. Verfahren nach Anspruch 5, **dadurch gekennzeichnet, dass** das Bestimmen des Fehlererkennungsergebnisses des Zielpolstücks gemäß der Fehlerposition in dem Polstück-Markierungslochbild Folgendes umfasst:

Bestimmen, ob ein Abstand von der Fehlerposition zu einer ersten Kante des Polstück-Markierungslochbildes größer als der von dem Markierungsloch (Q1/Q2) zu der ersten Kante ist oder nicht, wobei die erste Kante eine Bildkante nahe einem Laser (C) des Polstück-Markierungslochbildes liegt;
unter der Bedingung, dass bestimmt wird, dass der Abstand von der Fehlerposition zur ersten Kante des Polstück-Markierungslochbildes größer als der vom Markierungsloch (Q1/Q2) zur ersten Kante ist, Erzeugen eines Fehlererkennungsergebnisses, dass das Zielpolstück keinen Fehler (P1) aufweist und ein vorheriges Polstück des Zielpolstücks Fehler (P1) aufweist; und
unter der Bedingung, dass bestimmt wird, dass der Abstand zwischen der Fehlerposition und der ersten Kante des Polstück-Markierungslochbildes nicht größer als der Abstand zwischen dem Markierungsloch (Q1/Q2) und der ersten Kante ist, Erzeugen eines Fehlererkennungsergebnisses, dass das Zielpolstück Fehler (P1) aufweist.

7. Verfahren nach Anspruch 5, **dadurch gekennzeichnet, dass** nach dem Erkennen, ob ein Polstückbild, das Fehler (P1) aufweist, auf dem Zielpolstück in dem Polstückbild vorhanden ist oder nicht, wobei das Verfahren ferner Folgendes umfasst:
unter der Bedingung, dass bestimmt wird, dass das Polstückbild, das Fehler (P1) aufweist, an dem Zielpolstück nicht in dem Polstückbild vorhanden ist, Erzeugen eines Fehlererkennungsergebnisses, dass das Zielpolstück keinen Fehler (P1) aufweist.

8. Verfahren nach Anspruch 5, **dadurch gekennzeichnet, dass** nach dem Bestimmen, ob es sich bei dem Polstückbild, das Fehler (P1) aufweist, um das Polstück-Markierungslochbild handelt oder nicht, das Verfahren ferner Folgendes umfasst:
unter der Bedingung, dass bestimmt wird, dass das Polstückbild, das Fehler aufweist (P1), nicht das Polstück-Markierungslochbild ist, Erzeugen eines Fehlererkennungsergebnisses, dass das Zielpolstück Fehler (P1) aufweist.

9. Verfahren nach Anspruch 1, **dadurch gekennzeichnet, dass** das Polstückbild durch Aufnehmen des Zielpolstücks durch eine Vielzahl von Kameras erhalten wird, wobei jede Kamera einem Polstück-Markierungslochbild entspricht und die Vielzahl von Kameras nacheinander zwischen einem Laser (C) und der Beschriftungsposition angebracht sind; und das Bestimmen einer Beschriftungsverzögerung des Zielpolstücks gemäß dem Polstück-Markierungslochbild Folgendes umfasst:

Bestimmen einer entsprechenden Beschriftungsverzögerung gemäß dem Polstück-Markierungslochbild von einer aktuellen Kamera, wenn das entsprechende Polstück-Markierungslochbild durch Aufnehmen mit der aktuellen Kamera erhalten wird; und
Aktualisieren einer vorhergehenden Beschriftungsverzögerung gemäß der Beschriftungsverzögerung, die der aktuellen Kamera entspricht, wobei die vorhergehende Beschriftungsverzögerung durch das Polstück-Markierungslochbild bestimmt wird, das von einer vorhergehenden Kamera auf dem Zielpolstück aufgenommen wird, die vorhergehende Kamera eine zu der aktuellen Kamera benachbarte Kamera ist und ein Abstand zwischen der vorhergehenden Kamera und dem Laser (C) kleiner als der zwischen der aktuellen Kamera und dem Laser (C) ist.

10. Verfahren nach Anspruch 9, **dadurch gekennzeichnet, dass** die Vielzahl von Kameras eine Spaltkamera umfasst und die Spaltkamera eine Kamera ist, die der Vielzahl von Kameras der Beschriftungsposition am nächsten liegt; und dass ein Abstand zwischen der Spaltkamera und der Beschriftungsposition ein voreingestellter Abstand ist.

**11.** Verfahren nach Anspruch 10, **dadurch gekennzeichnet, dass** der voreingestellte Abstand durch eine Länge eines Einzelbildes bestimmt wird, das von der Spaltkamera und einer Bereitschaftslänge aufgenommen wird; und die Bereitschaftslänge gemäß der Signalübertragungs- und Reaktionszeit einer Beschriftungsmaschine (F1/F2) bestimmt wird.

**12.** Polstückbeschriftungs-Steuerverfahren, umfassend ein Erfassungsmodul (900),

ein Bestimmungsmodul (910) und ein Steuermodul (920);

das Erfassungsmodul (900) so konfiguriert ist, dass es ein Polstückbild eines Zielpolstücks erfasst, wobei das Polstückbild ein Polstück-Markierungslochbild umfasst;

das Bestimmungsmodul (910) so konfiguriert ist, dass es ein Fehlererkennungsergebnis gemäß dem Polstückbild bestimmt, einen ersten Abstand gemäß dem Polstück-Markierungslochbild bestimmt, wobei der erste Abstand einen Abstand von einem Markierungsloch (Q1/Q2) in dem Polstück-Markierungslochbild zu einer Bildkante nahe einer Beschriftungsposition kennzeichnet, des Polstück-Markierungslochbildes kennzeichnet, einen zweiten Abstandes gemäß dem ersten Abstand bestimmt, wobei der zweite Abstand einen Abstand von dem Markierungsloch (Q1/Q2) in dem Polstück-Markierungslochbild zu der Beschriftungsposition umfasst und eine Beschriftungsverzögerung des Zielpolstücks gemäß dem zweiten Abstand bestimmt; und

das Steuermodul (920) so konfiguriert ist, dass es die Beschriftung des Zielpolstücks gemäß der Beschriftungsverzögerung und dem Fehlererkennungsergebnis steuert,

wobei bei dem Bestimmen des zweiten Abstands gemäß dem ersten Abstand das Bestimmungsmodul (910) so konfiguriert ist, dass es einen dritten Abstand zwischen einer ersten Kamera und der Beschriftungsposition erfasst, wobei die erste Kamera eine Kamera ist, die das Polstückbild des Zielpolstücks aufnimmt; und den zweiten Abstand gemäß dem dritten Abstand und dem ersten Abstand bestimmt; und wobei bei dem Bestimmen der Beschriftungsverzögerung des Zielpolstücks gemäß dem zweiten Abstand das Bestimmungsmodul (910) so konfiguriert ist, dass es einen Kamerafrequenz-Teilungsparameter, einen Kamerafrequenz-Multiplikationsparameter und eine visuelle Erkennungsgenauigkeit erfasst; wobei das Bestimmungsmodul (910) ferner so konfiguriert ist, dass es die Beschriftungsverzögerung X gemäß einer zweiten Formel berechnet,

die lautet:

$$X=(L2*U)/(P*M),$$

wobei L2 der zweite Abstand, U der Kamerafrequenz-Teilungsparameter, M der Kamerafrequenz-Multiplikationsparameter und P die visuelle Erkennungsgenauigkeit ist.

**13.** Elektronische Ausrüstung (10), umfassend einen Speicher (1002) und einen Prozessor (1001), wobei der Speicher (1002) ein Computerprogramm speichert, und **dadurch gekennzeichnet, dass**, wenn das Computerprogramm von dem Prozessor (1001) ausgeführt wird, das Verfahren nach einem der Ansprüche 1-11 implementiert wird.

**14.** Computerlesbares Speichermedium, auf dem ein Computerprogramm gespeichert ist, **dadurch gekennzeichnet, dass**, wenn das Computerprogramm von einem Prozessor (1001) ausgeführt wird, das Verfahren nach einem der Ansprüche 1-11 implementiert wird.

## Revendications

**1.** Procédé de régulation d'étiquetage de pièces polaires, le procédé comprenant :

l'acquisition d'une image de pièce polaire d'une pièce polaire cible, l'image de la pièce polaire comprenant une image d'un trou de repère de pièce polaire ;
la détermination d'un résultat de détection de défauts en fonction de l'image de la pièce polaire ;
la détermination d'une première distance en fonction de l'image du trou de repère de pièce polaire, la première distance caractérisant une distance d'un trou de repère (Q1/Q2) dans l'image du trou de repère de pièce polaire à un bord d'image, à proximité d'une position d'étiquetage, de l'image du trou de repère de pièce polaire ;
la détermination d'une deuxième distance en fonction de la première distance, la deuxième distance comprenant une distance du trou de repère (Q1/Q2) dans l'image du trou de repère de pièce polaire à la position d'étiquetage ;
la détermination d'un retard d'étiquetage de la pièce polaire cible en fonction de la deuxième distance ; et
la régulation de l'étiquetage de la pièce polaire cible en fonction du retard d'étiquetage et du résultat de détection de défauts, dans lequel l'étape de détermination d'une deuxième distance, en fonction de la première distance, comprend :

l'acquisition d'une troisième distance entre une première caméra et la position d'étiquetage, la première caméra étant une caméra destinée à prendre l'image de pièce polaire de la pièce polaire cible ; et
la détermination de la deuxième distance en fonction de la troisième distance et de la première distance ; et
dans lequel l'étape de détermination d'un retard d'étiquetage de la pièce polaire cible, en fonction de la deuxième distance, comprend :

l'acquisition d'un paramètre de division de fréquence de la caméra, d'un paramètre de multiplication de fréquence de la caméra, et d'une précision de détection visuelle ; et
la détermination du retard d'étiquetage de la pièce polaire cible en fonction de la deuxième distance, du paramètre de division de fréquence de la caméra, du paramètre de multiplication de fréquence de la caméra et de la précision de détection visuelle ; le retard d'étiquetage X étant calculé selon une seconde formule, qui est la suivante :

$$X=(L2*U)/(P*M),$$

dans laquelle L2 est la deuxième distance, U est le paramètre de division de fréquence de la caméra, M est le paramètre de multiplication de fréquence de la caméra et P est la précision de détection visuelle.

2. Le procédé selon la revendication 1, **caractérisé en ce que** la détermination de la deuxième distance, en fonction de la troisième distance et de la première distance, comprend :
l'acquisition d'une longueur de l'image de la pièce polaire ; et la détermination de la deuxième distance en fonction de la troisième distance, de la première distance et de la longueur de l'image de la pièce polaire.

3. Le procédé selon les revendications 1 ou 2, **caractérisé en ce que** la détermination de la deuxième distance, en fonction de la troisième distance, de la première distance et de la longueur de l'image de la pièce polaire, comprend :

le calcul de la deuxième distance L2 selon une première formule, qui est la suivante :

$$L2=L3-2*L0+L1,$$

dans laquelle L1 est la première distance, L2 est la deuxième distance, L3 est la troisième distance, L0 est une distance de longueur de l'image de la pièce polaire dans une direction de transport de la pièce polaire, et le retard d'étiquetage est généré lorsque la première caméra achève la collecte d'une image suivante de l'image du trou de repère de pièce polaire.

4. Le procédé selon la revendication 1, **caractérisé en ce que** la régulation de l'étiquetage de la pièce polaire cible, en fonction du retard d'étiquetage et du résultat de détection de défauts, comprend :
sous la condition que le résultat de détection de défauts montre que la pièce polaire cible présente des défauts (P1), la régulation d'une machine d'étiquetage (F1/F2) au niveau de la position d'étiquetage afin qu'elle étiquette la pièce polaire cible après le retard d'étiquetage, de sorte que la pièce polaire cible soit découpée en fonction de l'étiquetage dans une étape de bobinage d'un élément de batterie.

5. Le procédé selon la revendication 1, **caractérisé en ce que** la détermination d'un résultat de détection de défauts, en fonction de l'image de la pièce polaire, comprend :

la détection de la présence ou non d'une image de pièce polaire comportant des défauts (P1) sur la pièce polaire cible dans l'image de la pièce polaire ;
sous la condition que l'image de pièce polaire comportant des défauts (P1) sur la pièce polaire cible soit présente dans l'image de la pièce polaire, la détermination que l'image de pièce polaire comportant des défauts (P1) est ou non l'image du trou de repère de pièce polaire ; et
sous la condition que l'image de pièce polaire comportant des défauts (P1) soit l'image du trou de repère de pièce polaire, la détermination du résultat de détection de défauts de la pièce polaire cible en fonction d'une position du défaut dans l'image du trou de repère de pièce polaire.

6. Le procédé selon la revendication 5, **caractérisé en ce que** la détermination du résultat de détection de défauts de la pièce polaire cible, en fonction de la position du défaut dans l'image du trou de repère de pièce polaire, comprend :

la détermination qu'une distance de la position du défaut à un premier bord de l'image du trou de repère de pièce polaire est ou non supérieure à la distance du trou de repère (Q1/Q2) au premier bord, le premier bord étant un bord d'image, à proximité d'un laser (C), de l'image du trou de repère de pièce polaire ;

sous la condition qu'il soit déterminé que la distance de la position du défaut au premier bord de l'image du trou de repère de pièce polaire est supérieure à la distance du trou de repère (Q1/Q2) au premier bord, la génération d'un résultat de détection de défauts indiquant que la pièce polaire cible ne présente pas de défaut (P1) et qu'une pièce polaire précédente de la pièce polaire cible présente des défauts (P1) ; et

sous la condition qu'il soit déterminé que la distance de la position du défaut au premier bord de l'image du trou de repère de pièce polaire n'est pas supérieure à la distance du trou de repère (Q1/Q2) au premier bord, la génération d'un résultat de détection de défauts indiquant que la pièce polaire cible présente des défauts (P1).

7. Le procédé selon la revendication 5, **caractérisé en ce que**, après la détection qu'une image de pièce polaire comportant des défauts (P1) sur la pièce polaire cible est ou non présente dans l'image de la pièce polaire, le procédé comprend en outre :
sous la condition qu'il soit déterminé que l'image de pièce polaire comportant des défauts (P1) sur la pièce polaire cible n'est pas présente dans l'image de la pièce polaire, la génération d'un résultat de détection de défauts indiquant que la pièce polaire cible ne présente pas de défaut (P1).

8. Le procédé selon la revendication 5, **caractérisé en ce que**, après la détermination que l'image de pièce polaire comportant des défauts (P1) est ou non l'image du trou de repère de pièce polaire, le procédé comprend en outre :
sous la condition qu'il soit déterminé que l'image de pièce polaire comportant des défauts (P1) n'est pas l'image du trou de repère de pièce polaire, la génération d'un résultat de détection de défauts indiquant que la pièce polaire cible présente des défauts (P1).

9. Le procédé selon la revendication 1, **caractérisé en ce que** l'image de la pièce polaire est obtenue au moyen d'une prise de vue de la pièce polaire cible à l'aide d'une pluralité de caméras, chaque caméra correspond à une image du trou de repère de pièce polaire, et la pluralité de caméras est disposée successivement entre un laser (C) et la position d'étiquetage ; et
la détermination du retard d'étiquetage de la pièce polaire cible, en fonction de l'image du trou de repère de pièce polaire, comprend :

la détermination d'un retard d'étiquetage correspondant en fonction de l'image du trou de repère de pièce polaire d'une caméra actuelle lorsque l'image correspondante de trou de repère de pièce polaire est obtenue par l'intermédiaire d'une prise de vue à l'aide de la caméra actuelle ; et
la mise à jour d'un retard d'étiquetage précédent en fonction du retard d'étiquetage correspondant à la caméra actuelle, le retard d'étiquetage précédent étant déterminé par l'image du trou de repère de pièce polaire prise par une caméra précédente sur la pièce polaire cible, la caméra précédente étant une caméra adjacente à la caméra actuelle, et une distance entre la caméra précédente et le laser (C) étant inférieure à la distance entre la caméra actuelle et le laser (C).

10. Le procédé selon la revendication 9, **caractérisé en ce que** la pluralité de caméras comprend une caméra de refendage, et la caméra de refendage est une caméra la plus à proximité de la position d'étiquetage parmi la pluralité de caméras ; et une distance entre la caméra de refendage et la position d'étiquetage est une distance prédéfinie.

11. Le procédé selon la revendication 10, **caractérisé en ce que** la distance prédéfinie est déterminée par une longueur d'une image unique prise par la caméra de refendage et par une longueur d'attente ; et la longueur d'attente est déterminée en fonction d'une transmission de signal et d'un temps de réponse d'une machine d'étiquetage (F1/F2).

12. Dispositif de régulation d'étiquetage de pièces polaires, le dispositif comprenant :

un module d'acquisition (900), un module de détermination (910) et un module de régulation (920) ;
le module d'acquisition (900) est conçu pour acquérir une image de pièce polaire d'une pièce polaire cible, l'image de pièce polaire comprenant une image d'un trou de repère de pièce polaire ;
le module de détermination (910) est conçu pour déterminer un résultat de détection de défauts en fonction de l'image de la pièce polaire, pour déterminer une première distance en fonction de l'image du trou de repère de pièce polaire, la première distance caractérisant une distance d'un trou de repère (Q1/Q2) dans l'image du trou de repère de pièce polaire à un bord d'image, à proximité d'une position d'étiquetage, de l'image du trou de repère de pièce polaire, pour déterminer une deuxième distance en fonction de la première distance, la deuxième distance comprenant une distance du trou de repère (Q1/Q2) dans l'image du trou de repère de pièce polaire à la position d'étiquetage, et pour déterminer un retard d'étiquetage de la pièce polaire cible en fonction de la deuxième distance ; et

le module de régulation (920) est conçu pour réguler l'étiquetage de la pièce polaire cible en fonction du retard d'étiquetage et du résultat de détection de défauts,

dans lequel, dans le processus de détermination de la deuxième distance en fonction de la première distance, le module de détermination (910) est conçu pour acquérir une troisième distance entre une première caméra et la position d'étiquetage, la première caméra étant une caméra destinée à prendre l'image de pièce polaire de la pièce polaire cible ; et pour déterminer la deuxième distance en fonction de la troisième distance et de la première distance ; et

dans lequel, dans le processus de détermination du retard d'étiquetage de la pièce polaire cible en fonction de la deuxième distance, le module de détermination (910) est conçu pour acquérir un paramètre de division de fréquence de la caméra, un paramètre de multiplication de fréquence de la caméra, et une précision de détection visuelle ; dans lequel le module de détermination (910) est conçu en outre pour calculer le retard d'étiquetage X selon une seconde formule, qui est la suivante :

$$X=(L2*U)/(P*M),$$

dans laquelle L2 est la deuxième distance, U est le paramètre de division de fréquence de la caméra, M est le paramètre de multiplication de fréquence de la caméra et P est la précision de détection visuelle.

13. Équipement électronique (10), comprenant une mémoire (1002) et un processeur (1001), la mémoire (1002) stockant un programme d'ordinateur, et **caractérisé en ce que**, lorsque le programme d'ordinateur est exécuté par le processeur (1001), le procédé selon l'une quelconque des revendications 1-11 est mis en œuvre.

14. Support de stockage lisible par ordinateur et destiné à stocker un programme d'ordinateur, **caractérisé en ce que**, lorsque le programme d'ordinateur est exécuté par un processeur (1001), le procédé selon l'une quelconque des revendications 1-11 est mis en œuvre.

Acquire a pole piece image of a target pole piece

Determine a defect detection result according to the pole piece image

Determine a first distance according to a pole piece mark hole image

Determine a second distance according to the first distance

Determine a labeling delay of the target pole piece according to the second distance

Control the labeling of the target pole piece according to the labeling delay and the defect detection result

FIG. 1

EP 4 411 634 B1

FIG. 2

FIG. 3

FIG. 4

FIG. 5

FIG. 6

FIG. 7

FIG. 8

900 Acquisition module

920 Control module

910 Determination module

FIG. 9

10

1001 Processor

1002 Memory

1003

Electronic equipment

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022052480 A1
- CN 113977669 A

- CN 114799573 A